# EUROPEAN PATENT APPLICATION

(11) **EP 4 491 661 A1**
(43) Date of publication of application: **15.01.2025**
(21) Application number: 23185534.7
(22) Date of filing: 14.07.2023
(51) Int. Cl.: C08J 11/08

(54) **RECYCLING METHOD FOR ELASTOMER TOUGHENED THERMOPLASTIC POLYMERS**

(71) Applicant: Trinseo Europe GmbH, 8810 Horgen (CH)
(72) Inventor: Balan, Abidin, 4814 VL Breda (NL); Bouquet, Gilbert, 9000 Gent (BE); Eekman, Elroy, 4533 AL Terneuzen (NL); Lakeman, Pascal E.R.E.J, 4836 AZ Breda (NL)
(74) Representative: Tostmann, Holger Carl

(57) **Abstract**

Toughened thermoplastic polymers such as acrylonitrile butadiene styrene comprising polymers (ABS) may be recycled by a method comprising dissolving the toughened thermoplastic polymer of in an aprotic solvent in the presence of a separating powder comprised of a smectite mineral having a small size (desirably submicron) and separating insoluble additives, elastomer particles and the separating powder by applying a force, which may be gravity, and recovering the separated thermoplastic polymer. The recovered elastomer and thermoplastic polymer may then be reused in the same type, similar or differing plastics avoiding degradation typically found when recycling toughened thermoplastic polymers.

## Description

### TECHNICAL FIELD

The invention relates to recycling of thermoplastic polymers toughened with elastomer domains/particulates. In particular, the invention relates to the recycling and separation of elastomers and insoluble additives (e.g., inorganic pigment particles) from elastomer toughened thermoplastics such as styrene-butadiene comprising polymers (HIPS) and acrylonitrile butadiene styrene comprising polymers (ABS).

### BACKGROUND

The recycling of thermoplastic polymers has generally been accomplished by mechanically pulverizing and incorporating into a composite or by dissolution and physical separation of insoluble materials (e.g., fillers, insoluble polymers, pigments and the like). Examples of such recycling include selective polymer dissolution in solvents and super critical fluids with or without the application of heat and removal of insoluble particles, including polymer precipitates by filtration or other means such as centrifugal decanting such as described in the following patents and patent publications: US5233021, US5278282, US8138232, US8338563, US20030191202, WO2001072900, WO2005026244 and WO2015076868.

Thermoplastic polymers toughened with elastomeric domains/particles (e.g., HIPS and ABS) are widely used for their impact strength and chemical resistance in a wide array of devices such as appliances (e.g., refrigerators) and electronic devices (e.g., televisions and computers). It is known that recycling of these type of plastics is problematic, because the recycled plastics fail to achieve the same properties and introduce substantial variability even when mixed with virgin polymers such as described by Japanese Application publications: JP2003231119 and JP2004323825A.

Accordingly, it would be desirable to provide an improved recycling method allowing greater use of thermoplastic polymers toughened with elastomeric domain/particles such as HIPS and ABS polymers.

### SUMMARY

Applicants have surprisingly discovered that in certain toughened thermoplastic polymers having elastomeric domains/particles dispersed therein such as ABS or HIPS polymer may be selectively dissolved and the thermoplastic polymer may be substantially separated from the elastomer and inorganic particulates even under gravitational force. This enables the use of the separate use of each of these in subsequent applications like the original application by blending with other components (e.g., virgin polymer or virgin rubber particles) reconstituting the characteristics of the recycled polymer. Alternatively, the recycled polymer may be used in other applications not requiring the same characteristics (e.g., applications of polystyrene "PS" or styrene-acrylonitrile "SAN" type polymers) where the recycled material may be used to enhance the properties due to the presence of a small amount of elastomer within the recycled PS or SAN.

A first illustration of the invention is a method of recycling a toughened thermoplastic polymer (TTP) having a thermoplastic polymer having therein an elastomeric polymer that is present as dispersed elastomer domains comprising, (a) dissolving the thermoplastic polymer of the TPP in a solvent comprised of an aprotic solvent forming a solution having insoluble additive particles and elastomer particles suspended therein, (b) mixing therein a separating powder comprised of a smectite mineral having an average particle size of at most 2 micrometers. (c) applying a force to the solution to separate the elastomeric particulates and insoluble additive particles from the solution to form a separated system, and (c) removing one or more of the thermoplastic polymer, elastomeric particles and insoluble additive particles from the separated system to form one or more of a recovered thermoplastic polymer, recovered elastomeric particle and recovered insoluble additive particle.

Other illustrations include: (1) a method of forming a thermoplastic polymer comprising the recovered thermoplastic polymer of the first illustration and a virgin impact modifier dispersed therein; (2) In this aspect, a thermoplastic polymer of virgin monomers is blended, for example, by melt blending with the recovered thermoplastic polymer (e.g., make an SAN thermoplastic polymer).

A third aspect of the invention is an impact modified thermoplastic polymer comprising the recovered thermoplastic polymer of the first aspect and a virgin impact modifier dispersed therein. In this aspect it has been discovered that the recovered thermoplastic polymer may be compounded in the same fashion as virgin thermoplastic polymer to realize an impact modified thermoplastic polymer having essentially the same characteristics and properties as such polymers made with virgin thermoplastic polymer.

A fourth aspect of the invention is an impact modified thermoplastic polymer comprising a thermoplastic polymer blended with the recovered elastomer of the first aspect. In an embodiment of this aspect, the elastomer containing insoluble higher density components (e.g., fillers and the like) of the toughened thermoplastic polymer that has been separated may be used for applications that demand some toughness improvement, but not to the extent virgin elastomer provides when blending with thermoplastic polymers.

### BRIEF DESCRIPTION OF THE DRAWINGS

Figure 1 displays the time dependent separation of Examples of this invention.
Figure 2 shows an article made from the recycled thermoplastic polymer of this invention and not of this invention.

### DETAILED DESCRIPTION

The method is comprised of dissolving the thermoplastic polymer of a thermoplastic polymer toughened by elastomeric domains/particles. The thermoplastic polymers toughened with elastomeric domains/particles ("toughened thermoplastic polymers") are comprised of a vinyl aromatic monomer polymerized in the presence of a polymerized conjugated diene (elastomer) dissolved in the aromatic vinyl monomer and any solvent used to polymerized the aromatic vinyl monomer and comonomer. The vinyl aromatic monomer typically is a monomer of the formula:

Ar-C(R¹)=C(R¹)₂

wherein each R¹ is independently in each occurrence hydrogen or alkyl or forms a ring with another R¹, Ar is phenyl, halophenyl, alkylphenyl, alkylhalophenyl, naphthyl, pyridinyl, or anthracenyl, wherein any alkyl group contains 1 to 6 carbon atoms which may optionally be mono or multi-substituted with functional groups. Such as halo, nitro, amino, hydroxy, cyano, carbonyl and carboxyl. Typically, the vinyl aromatic monomer has less than or equal to 20 carbons and a single vinyl group. In one embodiment, Ar is phenyl or alkyl phenyl, and typically is phenyl. Typical vinyl aromatic monomers include styrene (including conditions whereby syndiotactic polystyrene blocks may be produced), alpha-methylstyrene, all isomers of vinyl toluene, especially para-vinyltoluene, all isomers of ethyl styrene, propyl styrene, butyl styrene, vinyl biphenyl, vinyl naphthalene, vinyl anthracene and mixtures thereof. Typically, the vinyl aromatic monomer is styrene. Further examples of vinyl aromatic monomer include those described in U.S. Pat. Nos. 4,666,987; 4,572,819 and 4,585,825, which are herein incorporated by reference.

The vinyl aromatic monomers may be copolymerized with other addition polymerizable monomers such as unsaturated nitriles and (meth)acrylates. Unsaturated nitriles include, but are not limited to, acrylonitrile, methacrylonitrile, ethacrylonitrile, fumaronitrile and mixtures thereof. The unsaturated nitrile may be acrylonitrile.

(Meth) acrylate as used herein refers to compounds having a vinyl group or vinylidene bonded to the carbonyl moiety of an alkyl ester wherein the carbon of the vinyl vinylidene group bonded to the carbonyl group further has a hydrogen or a methyl group bonded thereto. Illustrative (meth)acrylates useful include those that correspond to the formula: 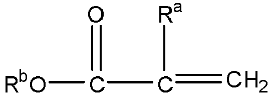 wherein R^{a} is separately in each occurrence H or -CH₃; and Rb may be a C₁ to C₃₀ alkyl group or C ₁₋₁₀ alkyl group. Examples of the one or more (meth)acrylates include lower alkyl (meth)acrylates, such as methyl (meth)acrylate, ethyl (meth)acrylate, propyl (meth)acrylate, butyl (meth)acrylate, pentyl (meth)(acrylate) and hexyl (meth) acrylate.

Other addition polymerizable monomers may include vinyl halides such as vinyl chloride, vinyl bromide, etc.; vinylidene chloride, vinylidene bromide, etc.; vinyl esters such as vinyl acetate, vinyl propionate, etc.; ethylenically unsaturated dicarboxylic acids and anhydrides and derivatives thereof, such as maleic acid, fumaric acid, maleic anhydride, dialkyl maleates or fumarates, such as dimethyl maleate, diethyl maleate, dibutyl maleate, the corresponding fumarates, N-phenyl maleimide etc.; and the like.

The copolymers may contain an other addition polymerizable monomer in an suitable amount and generally may be in an amount greater than 0.1 percent by weight of the copolymers or greater, about 1 percent by weight or greater or about 2 percent by weight or greater. The copolymers may contain one or more unsaturated nitriles in an amount of about 40 percent by weight of the copolymers or less, about 35 percent by weight or less, about 30 percent by weight or less or about 20 percent by weight or less.

The elastomer domains within the thermoplastic polymer may be any elastomeric polymer that phase separates into domains when forming the toughened thermoplastic polymer. Surprisingly in an embodiment, the elastomer may be cross-linked, grafted with the thermoplastic polymer, or occluded within thermoplastic polymer and still be separated. The cross-linking may arise from cross-linking within and between the chains of the conjugated diene, or cross-links arising between chains of polybutadiene and the thermoplastic polymer or combination thereof. When the elastomer is cross-linked sufficiently, the domains when dissolved remain as particles though they may undergo some swelling due solvation of the solvent. Nevertheless, the particles may be subject to the centrifugal force and separated.

In another embodiment, the polymer may have insufficient cross-linking (e.g., be a linear elastomer polymer) that may phase separate in the solvent to form droplets that are then able to be separated by the method described herein. This again may be accomplished even though the elastomer may have been grafted or occluded within the thermoplastic polymer.

Illustratively, the elastomer may be a polymerized conjugated alkene (e.g., diene) that forms the elastomer domains or particles within the thermoplastic polymer and may be any suitable to toughen the thermoplastic polymer. Generally, the conjugated alkene monomer is of the formula:

R₂C=CR-CR=CR₂

wherein each R, independently each occurrence, is hydrogen or alkyl of one to four carbons, where any two R groups may form a ring. Desirably the conjugated alkene is a conjugated diene monomer having at least 4 carbons and no more than about 20 carbons. The conjugated alkene monomer may have 2 or more conjugated double bonds. Examples include, 1,3-butadiene (butadiene), 2-methyl-1,3-butadiene (isoprene), 2-methyl-1,3 pentadiene, and similar compounds, and mixtures thereof. Desirably, the monomer is butadiene, isoprene or combination thereof.

The elastomer may be any thermoplastic elastomer (TPE) known in the art that phase separates during the formation of the toughened thermoplastic elastomer. Illustratively, the TPE may be a block copolymer comprised of at least two distinct blocks of a polymerized vinyl aromatic monomer and at least one block of a polymerized conjugated alkene monomer. wherein each block copolymer has at least two blocks of a vinyl aromatic monomer having up to 20 carbon atoms as previously described herein and a conjugated diene also previously described herein. The block copolymer can contain more than one specific polymerized conjugated alkene monomer. In other words, the block copolymer can contain, for example, a polymethylpentadiene block and a polyisoprene block or mixed block(s). In general, block copolymers contain long stretches of two or more monomeric units linked together. Suitable block copolymers typically have an amount of conjugated alkene monomer unit block to vinyl aromatic monomer unit block of from about 30:70 to about 95:5, 40:60 to about 90:10 or 50:50 to 65:35, based on the total weight of the conjugated alkene monomer unit and vinyl aromatic monomer unit blocks. The block copolymer TPE can contain more than one polymerized vinyl aromatic monomer. In other words, the block copolymer may contain a pure polystyrene block and a pure poly-alpha-methylstyrene block or any block may be made up of mixture of such monomers. Desirably, the A block is comprised of styrene and the B block is comprised of butadiene, isoprene or mixture thereof. In an embodiment, the double bonds remaining from the conjugated diene monomer may be hydrogenated.

Examples of such TPEs may include styrene-(butadiene)-styrene (SBS), styrene-(ethylene-butylene)-styrene (SEBS) or combination thereof. In an embodiment, the STPE is comprised of SEBS wherein essentially all of the unsaturated bonds of the source SBS have been hydrogenated. Such TPEs are commonly available under tradenames such as SEPTON and HYBRAR from Kuraray, (Houston, TX). STPEs that may be suitable are also available from Audia Elastomers (Washington, PA) under their trade designation TPE. Other suitable STPEs may include those available from Dynasol under the tradename CALPRENE, STPEs from Kraton Corporation (Houston, TX) under the KRATON F and G tradenames, Mexpolimeros (Mexico), and Asahi Kasei Corporation (Japan) under tradenames ASAPRENE and TUFPRENE.

The elastomer may also be a core shell rubber. The core shell rubber is comprised of particles having a core of elastomeric material and a shell of a protective material. Typically, the core is comprised of an elastomer having a low Tg to realize the toughening of the toughened thermoplastic polymer such as about 0 °C or less, about -25 °C or less, or about -40 °C or less. Exemplary core materials include polymers of siloxanes, silicones, ethylene, propylene, butadiene, acrylates, methacrylates and the like.

The shell is a relatively rigid polymer and may contain reactive groups that react with the polyester. Exemplary reactive groups on the surface of the shell of the core shell rubber may include glycidyl, maleic anhydride, and the like. The shell may further comprise polymer chains derived from one or more monomers that form rigid polymer chains. Any monomers which form rigid polymer chains may be utilized. The monomers may polymerize by free radical polymerization. The monomers may be capable of polymerizing in emulsion polymerization processes. Exemplary classes monomers are alkyl (meth) acrylates, styrenics, acrylonitriles, and the like. Exemplary alkyl (meth)acrylates include alkyl acrylates, such as methyl acrylate, ethyl acrylate, n-propyl acrylate, n-butyl acrylate, 2-ethylhexyl acrylate, and alkyl methacrylates, such as hexyl methacrylate, 2-ethylhexyl methacrylate, n-lauryl methacrylate, n-butyl acrylate may be preferred. The shell may be prepared from alkyl (meth)acrylates, crosslinkers and graft-active monomer units. Multifunctional compounds may be used as crosslinkers. Examples include ethylene glycol dimethacrylate, propylene glycol dimethacrylate, 1,3-butylene glycol dimethacrylate and 1,4-butylene glycol dimethacrylate. The following compounds individually or in mixtures may be used for inserting graft-active sites: allyl methacrylate, triallyl cyan-urate, triallyl isocyanurate, allyl methacrylate. Allyl methacrylate may also act as cross-linker. These compounds may be used in amounts of about 0.1 to about 20 percent, based on the weight of core shell rubber. The preferred graft shell includes one or more (meth)acrylic acid (C1-C8)-alkyl esters, especially methyl methacrylate copolymerized with glycidyl(meth)acrylate.

The core may have grafting sites on its outer surface to facilitate bonding of the shell to the core. The core is a particle having a sufficient size to positively impact the impact properties and the environmental stress crack resistance of the composition of the invention. The particles size may be a median particle size (d50 value) of about 0.05 microns or greater or about 0.1 microns or greater. The particles size may be a median particle size (d50 value) of about 5.0 microns or less, about 2.0 microns of less or about. 1.0 micron or less. The weight ratio of the core to the shell may be any as typically used in the art such as from about 1:99 or greater, about 2:98 or greater or about 3:97 or greater. The weight ratio of the core to the shell may be about 95:5 or less, about 90:10 or less or about 80:20 or less.

The amount of elastomer in the toughed thermoplastic polymer may be any amount such as commonly used in the art to make such polymers. Illustratively, when the toughened thermoplastic polymer is an ABS or HIPS, the amount of the conjugated alkene (e.g., butadiene) typically ranges from about 1%, or 5% to about 40%, 35% or 30% by weight of the ABS or HIPS polymer (i.e., not including any other additives such as fillers and the like). Typically, the particle size/domain size of the elastomers within the thermoplastic polymer is from about 0.1 micrometers to about 10 micrometers equivalent spherical diameter, which may be determined by known micrographic techniques. Such levels of elastomer may of course apply to any elastomer used to form the toughened thermoplastic polymer.

The toughened thermoplastic polymers may contain further additives commonly used in such polymers. Exemplary additives include ignition resistant additives, stabilizers, colorants, antioxidants, antistats, silicon oils, flow enhancers, mold releases, etc. Exemplary ignition resistance additives include halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Compounds which stabilize mass polymerized rubber-modified vinylidene substituted aromatic copolymer compositions against degradation caused by, but not limited to heat, light, and oxygen, or a mixture thereof may be used.

Insoluble additive particles include fillers/pigments and reinforcements Exemplary fillers/pigments include oxides (CaO and TiO₂), talc, clay, wollastonite, mica, carbon black, glass or a mixture thereof. The fillers generally have a particle size of 1 to 500 micrometers.

Such insoluble additive particles may be present in the toughened thermoplastic polymer in an amount about 0.01 percent by weight or greater, about 0.1 percent by weight or greater, about 1 percent by weight or greater, about 2 percent by weight or greater, or about 3 percent by weight or greater based on the weight of the compositions. The additives and/or fillers may be present in an amount of about 40 percent by weight or less, about 30 percent by weight or less, about 20 percent by weight or less, about 15 percent by weight or less, about 10 percent by weight or less, about 5 percent by weight or less based on the weight of the composition. The additives may be present in amounts up to 5 weight percent while fillers may be present in amounts up to 40 weight percent based on the weight of the toughened thermoplastic polymer.

These insoluble additives may be advantageously separated simultaneously in the method of the invention as described herein. They may be further separated by other techniques in series or parallel such as those known in the art including, for example, filtration, sedimentation, precipitation, preferential dissolution, flotation or combination thereof. Likewise, it is understood that the toughened thermoplastic polymer may be present in the device to be recycled as a blend with other polymers (blended polymers) such as commonly used in the art (e.g., polycarbonate-ABS or polycarbonate-HIPS blends). Or, the toughened thermoplastic polymer may be present in a device with other polymers such as in laminate, coating, or separate polymeric components (separate polymers) where the dissolving may include the dissolution of the blended polymers and separate polymers, which may be separated by the method herein and as desired further separated from the thermoplastic polymer also in solution by any useful method to do so.

To perform the dissolving any known methods or combination of methods may be employed to facilitate or accelerate the dissolving of the thermoplastic polymer of the toughened thermoplastic polymer. For example, the scrap polymer may be in the form of devices that may be mechanically shredded, crushed, comminuted or disassembled and separated prior to being dissolved or present when dissolving and be simultaneously separated from by any known methods for separation of insoluble or soluble components of such devices. Generally, the size of the toughened thermoplastic may be any that is useful to dissolve in a time to a concentration of solution that is commercially practicable for separation by the method of the invention. Illustratively, the size of the toughed thermoplastic polymer or remnant of the device may be from several millimeters to 10 or 20 centimeters.

The dissolving may be accomplished in a batch or continuous manner by known methods, which may include the use of agitation, heating and the like and may be performed in a closed or open system. Desirably, the system is closed, wherein the solvent is contained and recycled, and the application of heat may be used with minimizing loss of solvent to the atmosphere. The over-pressure may be comprised of an inert gas including but not limited to nitrogen or noble gas. The elevated pressure may be any useful for performing the method and minimizing vapor losses of the solvent. For example, the pressure may be from 1.1, 2, 5 or 10 bar to about 100 bar.

When dissolving, the thermoplastic polymer of the toughened thermoplastic polymer is dissolved in a particular solvent the elastomeric polymer forms particles or droplets (particles collectively) that are not miscible in the solution of solvent and are suspended in the solution of the thermoplastic polymer and solvent. It is understood that some elastomeric polymer may be contained in the solution, but that this amount is not substantial. For example, the amount of elastomeric polymer remaining in the recovered thermoplastic polymer from the method is typically at most about 4%, 3%, 2%, 1%, 0.5% or 0.3% or less by weight and the reduction of elastomeric polymer is at least about 80%, 90% or 95% of the amount in the toughened thermoplastic polymer being recycled.

To enable the separation of the elastomeric polymer from the thermoplastic polymer, the solvent-thermoplastic polymer solution has a density that is different than the elastomeric polymer particles (elastomer particles), which may or may not be solvated with the solvent of used to dissolve the thermoplastic polymer. The difference in density is such that upon application of a force, the elastomeric polymer is separated from the solvent-thermoplastic polymer solution allowing recovery of the thermoplastic polymer and elastomeric polymer. Generally, this means that the density difference allows for commercially practicable separation at centrifugal forces readily obtained by commercially available centrifuges for separating larger volumes. Typically, the difference in densities is at least about 1%, 2%, 5% or 10%.

The solvent may be any that sufficiently dissolves the thermoplastic polymer allowing separation of the elastomer particles and insoluble additive particles. The solvent may be any solvent useful to dissolve the thermoplastic polymer of the toughened thermoplastic polymer including, for example, aprotic solvents and polar aprotic solvents. Illustratively, the first solvent may include one or more of a linear aliphatic ketone, linear acetate, linear aldehyde, linear carbonate and linear ether. Desirably, the solvent is comprised of a polar aprotic solvent having a dielectric constant of at least 10, 15 or 20, particularly when the thermoplastic polymer is a copolymer of a nitrile monomer and vinyl aromatic monomer such as ABS. Examples of such a polar aprotic solvent is an aliphatic ketone have 1 to 6 carbons such as acetone, methyl ethyl ketone, methyl propyl ketone and methyl propyl ketone. The solvent may any polar aprotic solvent having a dielectric constant greater than. The solvent may be comprised of a mixture of solvents. Illustratively, the solvent may be comprised of one or more of a ketone, nitrile, amide, sulfoxide, formamide, cyclic ether, cyclic carbonate and cyclic ester. Desirably, a nitrile (e.g., an aliphatic nitrile) and ketone are used when the thermoplastic polymer is a copolymer such as ABS. Illustratively, the solvent may be comprised of a ketone and an aliphatic nitrile having from one to 7 carbons. Exemplary solvents may include besides the aliphatic ketone described above N-methylpyrrolidone, N,N-dimethylformamide, dimethyl acetamide, dimethyl sulfoxide, acetonitrile, and propylene carbonate,

Generally, the concentration of the thermoplastic polymer in the solvent is from about 5% to 25%, 20% or 15%% by weight in the embodiment where the density of the solvent-thermoplastic polymer is less than the density of the elastomeric polymer suspended in the solution and has a suitable viscosity. Desirably, the viscosity of the solvent is as low as possible to facilitate the separation of the elastomeric polymer from the solvent-thermoplastic polymer solution. To facilitate the separation, the solvent has a low viscosity. For example, the viscosity (kinematic) is less than 10, 5, 1, or even 0.5 millipascal·seconds (mPa·s) at ambient conditions (~20°C). In an embodiment, the viscosity of the solvent-thermoplastic solution viscosity may be lowered by heating during the method or any portion of the method. Typically, the heating is to a temperature below the boiling point of the solvent and in a closed system that may be at elevated pressures previously described. Illustratively, the heating temperature may be from about 25°C or 30°C to about 50°C or 40°C. It is understood that nothing herein precludes the cooling of the solution or any component thereof if desired, but cooling is not necessary. Nevertheless, it is contemplated that the method may be performed at reduced temperatures (e.g., less than about 20°C to about -40°C, -20°C, or 0°C). Likewise, it is understood that some cooling may be desired to maintain temperature during the method, for example, to extract frictional heat arising from rotating equipment.

Each of the solvents present in the solvent generally have a density of at most 1.2 g/cc. Desirably, each of the solvents has a density of at most 1.1 g/cc, 1.0 g/cc, 0.9 g/cc 0.8 g/cc. Each of the solvents also generally have a molecular weight of at most about 100 g/mol or 90 g/mol.

It has been surprisingly discovered that the addition of a separating powder comprised of a smectite mineral and having an average particle size of at most 2 micrometers may allow for the separation of elastomer particles that have small domains elastomers such as emulsion polymerized toughened thermoplastic polymers (e.g., ABS). The separating powder generally has an average size of 1.5 micrometer, 1 micrometer, 0.75 micrometer, 0.5 micrometer, 0.250 micrometers to 50 nanometers. It is desirable for all of the particles to be less than 1 micrometer, 0.75 micrometer, 0.5 or 0.25 micrometer. Generally, the separating powder has a specific surface area (ISO 9277:2010) commensurate with a submicron powder with it typically being beneficial for the specific surface area to be at least at least 10 m²/g, 25 m²/g or 50 m²/g, 100 m²/g to any practical including 1000, 750, 500 or 300 m²/g.

It is believed without being limiting that the separating powder having such a small size may coalesce the insoluble additives and elastomer particles suspended in the solution allowing them to be separated by application of much lower forces including merely gravitational separation in commercially practicable times and much higher throughput under commercially available continuous centrifugal methods such as described herein. The coalescence may, without being limiting, due to the platy structure and potential to have differing charged surface potentially bridging the surfaces of the elastomer particles, insoluble particles or combinations thereof causing them to agglomerate. Platy means that there are two larger somewhat equivalent dimensions (typically width and length) and one smaller dimension (typically height). The aspect ratio is typically 3, 4, 5 or 10 to 1000, 500 or 100. The average aspect ratio may be determined by micrographic techniques measuring the longest and shortest dimension of a random representative sample of the particles (e.g., 100 to 200 particles).

The separating powder may be comprised of any suitable smectite mineral such as those known in the art. As utilized herein, the term "smectite mineral" refers to the general class of clay minerals with expanding crystal lattices, with the exception of vermiculite. This includes the dioctahedral smectites which consist of montmorillonite, beidellite, and nontronite, and to the trioctahedral smectites, which includes saponite, hectorite, and sauconite. Also encompassed are smectite-clays prepared synthetically, e.g. by hydrothermal processes as disclosed in U.S. Pat. Nos. 3,252,757; 3,666,407; 3,671,190; 3,844,978; 3,844,979; and 3,855,147 with the synthetic smectites generally being preferred and in particular synthetic montmorillonite having a high purity. The high purity may be desirable to accentuate the coalescence of the insoluble additives and elastomer particles suspended in the solution, with a purity of the smectite desirably being at least 95%, or 99% pure (i.e., essentially the smectite mineral, which may be, for example, montmorillonite). It may also be desirable for the separating powder to be an exfoliated smectite mineral such as described by U.S. Pat. 6,730,719. An exemplary separating powder may be those commercially available under CAS:1318-93-0 from Intelligent Materials Pvt. Ltd. (Montmorillonite k10 Powder).

The amount separating powder may be any useful to facilitate the separation of the elastomer particles and insoluble additive particles. Generally, the amount separating powder may be, for example, any amount from 0.05 %, 0.1 %, 0.25 %, or 0.5 % to 20%, 15% or 10% by weight of the toughened thermoplastic polymer including any insoluble additives, solvent and separating powder. When the separating force is merely gravitational (settling) it may be desirable for the amount of separating powder to be at least about 2% by weight to any practicable amount to 20% by weight as just described.

To separate the elastomeric particles or droplets and insoluble additives suspended with the solvent-thermoplastic polymer solution a sufficient force is applied. Desirably a force that realizes at least about 80% of the amount of the particles in the toughened thermoplastic polymer are separated in a reasonable time (e.g., ~1 minute to about 30 minutes, 20 minutes, 15 minutes or 10 minutes). Generally, the force is at least about 1 g, 10g, 50 g, 100g, 200g, or 500g to 20,000g, 10,000g, 5,000g or 2500g.

In an embodiment, other additives that dissolve in the solvent ("soluble additives") may be removed from the solvent by an adsorption column after separating by application of the force including a centrifugal force. Exemplary soluble additive may be flame retardants, light stabilizers (e.g., hindered amines) and colorants. The adsorption column may be any suitable adsorption column such as those known in the art. Typically, the adsorption column is comprised of activated carbon black.

The separated system formed upon application of the force generally includes other insoluble additive that are separated simultaneously as the elastomeric particles. The insoluble additives may be any of those known in the art such as fillers, fibers, flame retardants and the like that may be recovered by any suitable method such as those known in the art, including, for example screening, filtration and the like.

The force may be merely gravitational or generated by any suitable rotating equipment such as commercial scale centrifuges/rotational separators. Examples may include a tubular bowl centrifuge, chamber bowl centrifuge, disk stack separator, imperforate basket centrifuge, decanting centrifuge or combinations thereof. The application may be continuous, batch or semi-continuous or combinations thereof. Several centrifuges may also be used in series. For example, a combination of a continuous centrifuge may be combined with batch centrifuge such as a bowl centrifuge where one centrifuge does a rough separation and the second centrifuge does a finer separation.

In an embodiment, a decanting centrifuge is employed where in one stream the elastomer is removed from the decanting centrifuge along with other insoluble additives if present and the solvent-thermoplastic polymer solution is decanted in a second stream. The thermoplastic polymer is then recovered from the second stream. Each stream may be subjected to suitable method for separating or modifying any of the components of the stream such as those known in the art (e.g., solvolysis or pyrolysis, or separation as previously described), For example, the thermoplastic is further separated by a suitable method and recovered by a suitable method such as precipitation of the polymer from the solvent and recovery of the polymer by filtration or decanting off of the solvent or removal of the solvent by vaporization or any other known method such as described in any one of US5233021, US5278282, US8138232, US8338563, US20030191202, WO2001072900, WO2005026244 and WO2015076868, each incorporated herein by reference. In another embodiment, there may be three streams that comprise the separated system arising from the application of the force, the first and second as described above and a third stream comprised of insoluble material. In this embodiment, the decanting centrifuge may be configured to withdraw three streams.

After recovering the thermoplastic polymer and particles each of these may be reused in the same type of toughened thermoplastic polymer or used in different polymers. In an embodiment, the recovered elastomeric polymer with or without any virgin elastomeric polymer may be dissolved in thermoplastic monomers described herein such as styrene or styrene acrylonitrile and optionally solvent, which are then polymerized by suitable polymerization methods (e.g., bulk or solution polymerization) to form a toughened thermoplastic polymer comprised of elastomeric domains, wherein at least some portion (i.e., at least 10%, 25%, 50%, 75% or 90% by weight) or all of the domains are comprised of recycled elastomeric polymer.

In another embodiment, the recovered elastomer may be blended with a virgin thermoplastic polymer, such as those described herein, for example, by melt blending as is common in the art to form toughened thermoplastic polymers. When reusing the recovered elastomer, the elastomer may be further separated from other components entrained in the recovered elastomer (e.g., fillers and the like) or used with them present, which may be desirable when an improvement in properties is desired, but not to the extent virgin elastomers are required. In an embodiment, the recovered elastomer, with or without other entrained components, may be used to modify the properties of a thermoset polymer (e.g., addition to thermoset resin that is subsequently cured).

In another embodiment, the recovered thermoplastic polymer may be blended with a virgin thermoplastic polymer. Virgin thermoplastic polymer meaning it is a polymer that is not comprised of any recycled or recovered polymer. In this embodiment, the virgin thermoplastic polymer may be comprised of the thermoplastic monomers such as those described above and may be the same as the monomer(s) of the recovered thermoplastic polymer. For example, the recovered thermoplastic polymer may be a styrene-acrylonitrile (SAN) copolymer or polystyrene (PS) with some trace of elastomeric polymer (e.g., polybutadiene or polyisoprene as described above) that is mixed with SAN copolymer or PS as the case may be. Or, the recovered thermoplastic polymer may be blended with differing compatible thermoplastic polymers such as thermoplastic polymers of differing monomers. For example, the recovered thermoplastic polymer may be a SAN copolymer and the virgin polymer may be a PS or SAN of a differing styrene/acrylonitrile ratio or a copolymer of alpha-methylstyrene and methacrylonitrile. The blending may be carried out by any suitable method such as those known in the art including, but not limited, to melt blending and extruding.

In another embodiment, the recovered thermoplastic polymer may be combined with virgin elastomer (e.g., those described herein) in any suitable manner such as those known in the art to make toughened thermoplastic polymers as described herein. Illustratively, the virgin elastomer may be melt blended and compounded with the recovered thermoplastic polymer using an extruder as commonly practiced in the art. The levels of elastomer and dispersion of the elastomer may be any as previously described herein. In this embodiment, it has been surprisingly found that such toughened thermoplastic polymers may have essentially the same properties and characteristics as such toughened thermoplastic polymers made using virgin thermoplastic polymers in the same manner and concentrations.

### Illustrations

Illustration 1. method of recycling a toughened thermoplastic polymer having therein an elastomeric polymer that is present as dispersed elastomer domains comprising,
(a) dissolving the thermoplastic polymer in an aprotic solvent comprised of an aprotic solvent having to form a solution having insoluble additive particles and elastomer particles suspended therein
(b) mixing therein a separating powder comprised of a smectite mineral having an average particle size of at most 2 micrometers.
(b) applying a force to the solution to separate the elastomeric particulates and insoluble additive particles from the solution to form a separated system,
(c) removing one or more of the thermoplastic polymer, elastomeric particles and insoluble additive particles from the separated system to form one or more of a recovered thermoplastic polymer, recovered elastomeric particle and recovered insoluble additive particle.

Illustration 2. The method of illustration 1 wherein separating powder is comprised of at least 95% of the smectite mineral.

Illustration 3. The method of illustration 2, wherein the separating powder is comprised of at least 99% by weight of the smectite mineral.

Illustration 4. The method of illustration 3, wherein the smectite mineral is comprised of montmorillonite.

Illustration 5. The method of illustration 4, wherein the smectite mineral is essentially montmorillonite

Illustration 6. The method of any one of illustrations 1 to 5, wherein the separating powder has an average particle size of at most 1 micrometer.

Illustration 7. The method of any one of the preceding illustrations, wherein the separating powder has a maximum particle size of less than 1 micrometer.

Illustration 8. The method of any one of illustrations 1 to 7, wherein the separating powder has a specific surface area of at least 50 m²/g.

Illustration 9. The method of illustration 8, wherein the specific surface area is at least 100 m²/g.

Illustration 10. The method of illustration 9, wherein the specific surface area is at least 200 m²/g.

Illustration 11. The method of any one of the preceding illustrations, wherein the aprotic solvent is comprised of a first solvent having a dielectric constant of 2 to 25 and a second polar aprotic solvent having a dielectric constant of greater than 25.

Illustration 12. The method of illustration 11, wherein the first solvent is comprised of one or more of a linear aliphatic ketone, linear acetate, linear aldehyde, linear carbonate and linear ether.

Illustration 13. The method of illustration 12, wherein the first solvent is comprised of a linear ketone.

Illustration 14. The method of illustration 11 or 12, wherein the density of the first solvent is at most 0.8 g/cc.

Illustration 15. The method of any one of illustrations 11 to 14, wherein the ketone is comprised of acetone or methyl ethyl ketone.

Illustration 16. The method any one of illustrations 11 to 15, wherein the second solvent has a density of at most 1 g/cc

Illustration 17. The method of any one of illustrations 11 to 16, wherein the second solvent is comprised of one or more of a nitrile, amide, sulfoxide, formamide, cyclic ether, cyclic carbonate and cyclic ester.

Illustration 18. The method of illustration 17, wherein the second solvent is comprised of one or more of acetonitrile, propionitrile, butyronitrile, pentanenitrile and hexanenitrile.

Illustration 19. The method of any one of the preceding illustrations, wherein the toughened thermoplastic polymer is an acrylonitrile-butadiene-styrene copolymer.

Illustration 20. The method of any one of the preceding illustrations, wherein a centrifugal force is applied by a centrifuge, wherein the separating results in at least two streams with one stream comprised of the thermoplastic polymer in the solution and the other comprised of the elastomer and insoluble additive.

Illustration 21. A method of forming a thermoplastic polymer comprising the recovered thermoplastic polymer of any one of preceding illustrations 1 to 20 and a virgin impact modifier dispersed therein.

Illustration 22. A method of forming a thermoplastic polymer comprised of blending a virgin thermoplastic polymer blended with the recovered thermoplastic polymer of any one of the preceding illustrations 1 to 20.

Illustration 23. A method of forming an impact modified thermoplastic polymer comprising a thermoplastic polymer blended with the recovered elastomer of illustration 1 to 20.

Illustration 24. The method of any one of illustrations 1 to 20, wherein an inorganic particulate that is insoluble in the solvent is added to the thermoplastic polymer.

Illustration 25. The method of any one of illustration 1 to 20, wherein the solution is passed through an adsorption column.

Illustration 26. The method of illustration 25, wherein the solution is passed through the adsorption column after applying the force.

Illustration 27. The method of any one of the preceding illustrations, wherein the second solvent's dielectric constant is at least 10.

Illustration 28. An article comprised of one or more of the of the recovered thermoplastic polymer, recovered elastomeric particles and recovered insoluble additive particles of any one of the preceding illustrations.

Illustration 29. The article of illustration 28, wherein the recycled polymer article is a consumer article.

Illustration 30. The article of illustration 29, wherein the consumer article is an appliance, electronic device or toy.

### Examples

### Examples 1-9

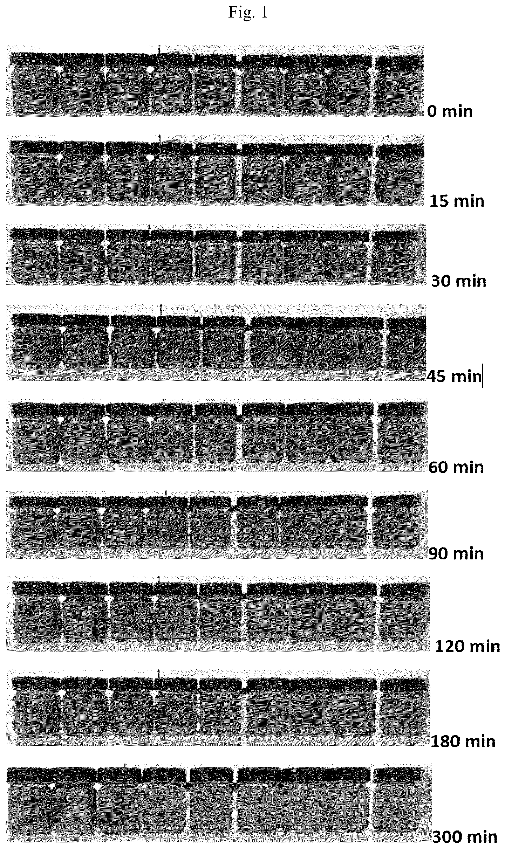

ABS waste collected from end-of-life toys is dissolved in a solvent comprised of 90% acetone and 10% acetonitrile by weight. mixture in 200L drum vessel at a ABS waste loading of 10 % by weight and Montmorillonite clay (K10, CAS:1318-93-0) is added in different quantities (1 to 9% by weight of ABS waste). After 2h thumbling/agitation each mixture is gravimetrically settled. In less than 20 mins the significant increase in separation efficiency as a function of the montmorillonite concentration has been observed. The improvement of the separation of the clay having greater than 2% by weight under gravity is readily apparent in Figure 1.

### Comparative Example 1 and Example 10

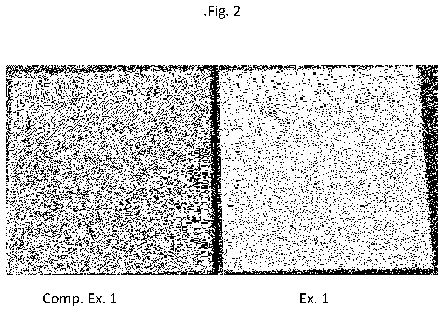

Example 10 repeats the process above using 5% by weight of montmorillonite and 4 hours settling. The supernatant is drawn off and passed through a carbon adsorption column to remove the soluble dyes. The remaining thermoplastic polymer is removed from the solvent and compounded into a recycled emulsion polymerized ABS and the resultant polymer is injection molded into a plaque as shown in Figure 2.

Comparative Example 1 undergoes the same dissolution process as Example 10, but in the absence of montmorillonite. Gravimetric separation in 4h was not possible therefore centrifugal force was applied by a continuous-flow centrifuge (centrifugal force = 2400 g at 300L/h flowrate). In a like manner as Example 10 the remaining thermoplastic polymer is removed from the solvent and compounded into a recycled emulsion polymerized ABS and the resultant polymer is formed into a tile as shown in Figure 2. From Figure 2, it is apparent that the gravimetric settling of Example 10 is more efficient at removing undesired additives than separations without use of the montmorillonite even when using a much higher separation force as in Comparative Example 1.

## Claims

1. A method of recycling a toughened thermoplastic polymer having a thermoplastic polymer and dispersed therein an elastomeric polymer that is present as dispersed elastomer domains comprising,
(a) dissolving the thermoplastic polymer in a solvent comprised of an aprotic solvent forming a solution of the thermoplastic polymer having insoluble additive particles and elastomer particles suspended therein,
(b) mixing therein a separating powder comprised of a smectite mineral having an average particle size of at most 2 micrometers,
(c) applying a force to the solution to separate the elastomeric particles and insoluble additive particles from the solution to form a separated system, and
(d) removing one or more of the thermoplastic polymer, elastomer particles and insoluble additive particles from the separated system to form one or more of a recovered thermoplastic polymer, recovered elastomeric particle and recovered insoluble additive particle.

2. The method of claim 1, wherein separating powder has a surface area of at least 100 m²/g.

3. The method of claim 2, wherein the separating powder is comprised of at least 99% by weight of the smectite mineral.

4. The method of claim 3, wherein the smectite mineral is comprised of synthetic montmorillonite.

5. The method of any one of the preceding claims, wherein the separating powder has a maximum particle size of less than 1 micrometer.

6. The method of any one of the preceding claims, wherein the aprotic solvent is comprised of a first solvent having a dielectric constant of 2 to 25 and a second polar aprotic solvent having a dielectric constant of greater than 25.

7. The method of claim 6, wherein the first solvent is comprised of one or more of a linear aliphatic ketone, linear acetate, linear aldehyde, linear carbonate and linear ether.

8. The method of any one of claim 7, wherein the ketone is comprised of acetone or methyl ethyl ketone.

9. The method of any one of claims 6 to 9, wherein the second solvent is comprised of one or more of a nitrile, amide, sulfoxide, formamide, cyclic ether, cyclic carbonate and cyclic ester.

10. The method of claim 9, wherein the second solvent is comprised of one or more of acetonitrile, propionitrile, butyronitrile, pentanenitrile and hexanenitrile.

11. The method of any one of claims 6 to 10, wherein the second solvent is comprised of acetonitrile and the first solvent is comprised of acetone.

12. The method of any one of the preceding claims, wherein the toughened thermoplastic polymer is an acrylonitrile-butadiene-styrene copolymer.

13. The method of any one of the preceding claims, wherein the force is applied by a centrifuge, wherein the separating results in at least two streams with one stream comprised of the thermoplastic polymer in the solution and the other comprised of the elastomer particles and insoluble additive particles.

14. An article comprised of one or more of the of the recovered thermoplastic polymer, recovered elastomeric particles and recovered insoluble additive particles of any one of the preceding claims.

15. The article of claim 14, wherein the article is an appliance, electronic device or toy.
